# EUROPEAN PATENT APPLICATION

(11) **EP 4 520 601 A1**
(43) Date of publication of application: **12.03.2025**
(21) Application number: 24198883.1
(22) Date of filing: 06.09.2024
(51) Int. Cl.: B60R 25/24

(54) **SYSTEM AND APPARATUS SUITABLE FOR FACILITATING CONTROL OF A VEHICLE BASED ON USER INTENTION, AND A PROCESSING METHOD IN ASSOCIATION THERETO**

(30) Priority: 08.09.2023 GB 202313689
(71) Applicant: Continental Automotive Technologies GmbH, 30175 Hannover (DE)
(72) Inventor: Fernandes, Brian Sunil Nicholas, 339780 Singapore (SG)
(74) Representative: Continental Corporation

(57) **Abstract**

There is provided a processing method (300) which can be suitable for facilitating control of a vehicle based on user intention of a user outside of the vehicle. The processing method (300) can include an input step (302) which includes receiving at least one input signal communicable from a user device, a processing step (304) which includes processing the input signal(s) to verify whether the user is an authenticated user. When the user can be verified to be an authenticated user, intention of the authenticated user can be determined, and based on determined intention of the authenticated user, at least one control signal can be generated to facilitate control of at least one feature associated with the vehicle.

## Description

### Field Of Invention

The present disclosure generally relates to one or both of a system and an apparatus suitable for facilitating control of a vehicle based on user intention of a user outside of the vehicle. The present disclosure further relates a processing method which can be associated with the system and/or the apparatus.

### Background

Typically, it will be helpful to provide user convenience in connection with a vehicle which a user is using.

For example, in a situation where a user's hands are occupied (e.g., due to the user carrying shopping bags), the user may not be able to access the vehicle conveniently.

Conventional techniques for facilitating vehicle access include the use of key fobs. Although key fobs are common, such key fobs may not necessarily be helpful in facilitating convenient access to the vehicle in situations where the user's hands are occupied.

The present disclosure contemplates that it be desirable to address (or, at least partially address) at least one issue associated with the conventional technique(s).

### Summary of the Invention

The present disclosure generally contemplates the possibility that 5G sidelink localization can be utilized for facilitating identification of (which) time and space bound access feature to provide to a user of a vehicle, at a given time instant. It is further appreciable that the present disclosure generally contemplates sharing of beam forming and time of flight localization to improve adaptive accuracy of a RF system. It is yet further appreciable that the present disclosure generally contemplates the possibility of improvement on (existing) 5G implementation of the sidelink localization by manner of including a feature of beam direction as a parameter in localization algorithm. Moreover, it is appreciable that the present disclosure generally contemplates the possibility of multiple wireless access apparatuses 102 (e.g., transceivers) for providing spatially differentiated localization to facilitate improvement of reliability of location information.

In accordance with an aspect of the disclosure, there is provided a processing method which can, for example, be suitable for facilitating control of a vehicle. Facilitation of vehicle control can, for example, be based on user intention of a user outside of/external to the vehicle. The processing method can, for example, include an input step which can include receiving one or more input signals which can be communicated from a user device carried by a user. The processing method can, for example, include a processing step which can include processing the input signal(s) in a manner so as to verify whether the user is an authenticated user. When the user can be verified to be an authenticated user, intention of the authenticated user can be determined. Moreover, based on determined intention of the authenticated user, one or more control signals can be capable of being generated. The control signal(s) can, for example, correspond to the aforementioned output signal(s), in accordance with an embodiment of the disclosure. The processing method can, for example, include an output step 306 which can include communicating the control signal(s) for facilitating control of at least one feature associated with the vehicle (e.g., a security related feature such as unlocking one or more doors of the vehicle or disabling vehicle alarm and/or a user convenience related feature such as activating interior vehicle lighting/headlights or starting the vehicle).

The present disclosure further contemplates a computer program (not shown) which can include instructions which, when the program is executed by a computer (not shown), cause the computer to carry out the input step, the processing step and/or the output step of the processing method.

The present disclosure yet further contemplates a computer readable storage medium (not shown) having data stored therein representing software executable by a computer (not shown), the software including instructions, when executed by the computer, to carry out the input step, the processing step and/or the output step of the processing method.

In accordance with an aspect of the disclosure, there is provided an apparatus in association with the processing method, as discussed earlier. Moreover, the apparatus can, for example, correspond to an electronic module, in accordance with an embodiment of the disclosure.

The apparatus can, for example, include a first module, a second module and/or a third module, in accordance with an embodiment of the disclosure.

The first module can, for example, be configured to receive one or more input signals.

The second module can, for example, be configured to process and/or facilitate processing of the input signal(s) according to the processing method, as discussed earlier, to generate one or more output signals.

The third module can, for example, be configured to communicate the output signal(s).

In one embodiment, the output signal(s) can, for example, be associated one or more control signals. The control signal(s) can, for example, be communicated for facilitating, for example, unlocking of a vehicle associated with an authenticated user when it is determinable that the authenticated user is approaching the vehicle.

### Brief Description of the Drawings

Embodiments of the disclosure are described hereinafter with reference to the following drawings, in which:
Fig. 1a shows a system which can include at least one apparatus, according to an embodiment of the disclosure;
Fig. 1b shows an example scenario in association with the system of Fig. 1a, according to an embodiment of the disclosure;
Fig. 1c shows a first illustrative implementation in association with the example scenario of Fig. 1b, according to an embodiment of the disclosure;
Fig. 1d shows a second illustrative implementation in association with the example scenario of Fig. 1b, according to an embodiment of the disclosure;
Fig, 2 shows the apparatus of Fig, 1 in further detail, according to an embodiment of the disclosure; and
Fig. 3 shows a processing method in association with the system of Fig. 1, according to an embodiment of the disclosure.

### Detailed Description

The present disclosure contemplates that determining position of user device(s) around the vehicle periphery can be useful for one or more passive access vehicle authenticated user function(s) and/or one or more user utility functions (e.g., vehicle lighting up when an authorized user approaches the vehicle or shutting down when the authorized user walks away from the vehicle). An example of an access function can be trunk opening when an authorized user approaches the trunk or boot of the vehicle. The present disclosure contemplates that in an event of advance function(s) such as pre-localization for intention detection (e.g., intention of an authenticated user is tracked in the long range to identify if the authenticated user is going to approach the vehicle so as to facilitate providing one or more features where the user information can be provided, the vehicle charge, battery, messages, and other such functions. Additionally, in one example, localized features such unlocking or locking the correct door when an authenticated user is within opening distance of the respective passenger door or boot or trunk or bonnet can facilitate providing ease of use and seamless authentication across the vehicle access locks.

Generally, it is contemplated that passive device use can be possible, in that a user need not have to operate a user device (e.g., a key fob, Smartphone) actively. A transceiver of the vehicle can, for example, be configured to communicate with a transceiver of a user device (e.g., a vehicle transceiver can ping a user device transceiver via 5G wireless communication based standard(s) to authenticate the communication link, and enable the sidelink localization). The vehicle transceiver (e.g., onboard antenna of the transceiver) can, for example, be positioned atop the vehicle so as to allow for, for example, a 360-degree unobstructed visibility around the vehicle.

For example, the vehicle transceiver can be configured to "ping" challenge one or more surrounding devices so as to facilitate identification of an authenticated response to allow for initialization of a localization protocol. In an event where, for example, an authenticated response has not been received, the vehicle transceiver can be configured to go into a sleep mode and can periodically (based on a predetermined time period of interval "Tping" as can be defined in a system response protocol) restart the "ping" challenge process. In an event where, for example, an authenticated response is received (e.g., an authenticated "ping" can be received), a localization protocol can be initiated for measurement via a plurality of Beamforms (e.g., a first Beamform "Beamform1" followed by a second Beamform "Beamform 2") so as to facilitate the possibility of an even (e.g., uniform) RF (Radio Frequency) footprint. In another example, a third Beamform "Beamform 3" (following "Beamform 2") can be possible (to "N" number of Beamforms "Beamform N").

The present disclosure further contemplates the possibility of diversity beam forming (e.g., in which case a spatially separated transceiver can be configured based on the same localization protocol, but with a spatial separation that may allow for more precise localization in the case of multilateral localization).

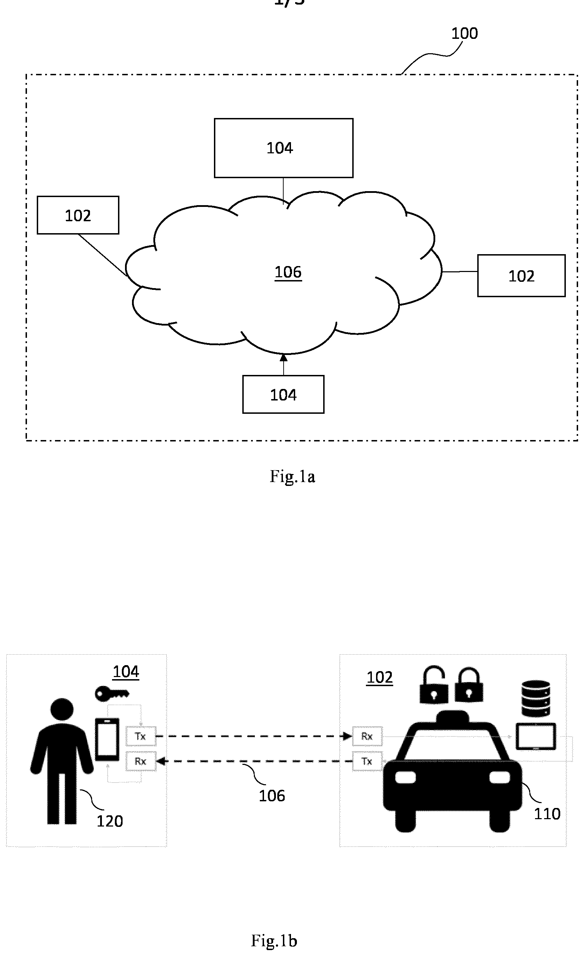

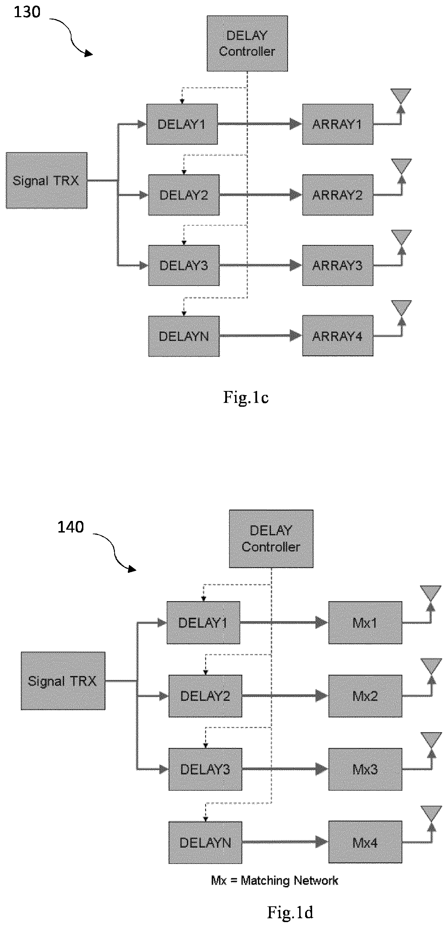

The foregoing will be discussed in further detail with reference to Fig. 1 to Fig. 3 hereinafter.

Referring to Fig. 1a, a system 100 is shown, according to an embodiment of the disclosure. For example, the system 100 can, for example, be capable (e.g., configured to) of user authentication (e.g., via at least one user device) and/or user intention, in accordance with an embodiment of the disclosure. A user device can, for example, be carried by a user. Moreover, a user can, for example, correspond to/be associated with/include a fob (e.g., key fob) or a Smartphone, in accordance with an embodiment of the disclosure.

Moreover, the system 100 can, for example, be associated with a vehicle (not shown), in accordance with an embodiment of the disclosure. In accordance with an embodiment, the system 100 can, for example, be partially carried by a vehicle (e.g., a portion of the system 100 can be carried by the vehicle and another portion of the system 100 can be carried external to the vehicle). In another embodiment, at least one portion of the system 100 can, for example, be carried by a vehicle.

As shown, the system 100 can include one or more apparatuses 102, one or more device 104 and, optionally, at least one communication network 106, in accordance with an embodiment of the disclosure.

The apparatus(es) 102 can be coupled to the device(s) 104. Specifically, the apparatus(es) 102 can, for example, be coupled to the device(s) 104 via the communication network 106, in accordance with an embodiment of the disclosure.

In one embodiment, the apparatus(es) 102 can be coupled to the communication network 106 and the device(s) 104 can be coupled to the communication network 106. Coupling can be by manner of one or both of wired coupling and wireless coupling. The apparatus(es) 102 can, in general, be configured to communicate with the device(s) 104 via the communication network 106, according to an embodiment of the disclosure.

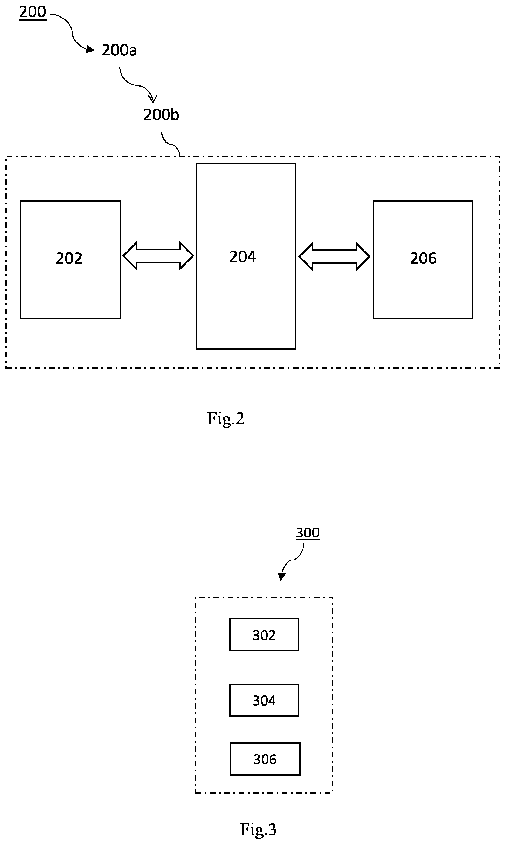

The apparatus(es) 102 can, for example, be configured to receive one or more input signals and process the input signal(s) to generate one or more output signals, in accordance with an embodiment of the disclosure. The apparatus(es) 102 will be discussed later in further detail with reference to Fig. 2, in accordance with an embodiment of the disclosure.

The device(s) 104 can be configured to generate and communicate one or more input signals. A device 104 can be, for example, correspond to a user device such as a Smartphone carried by a user (not shown). The user can, for example, be a driver of a vehicle (not shown).

The communication network 106 can, for example, correspond to an Internet communication network, a wired-based communication network, a wireless-based communication network, or any combination thereof. Communication (i.e., between the apparatus(es) 102 and the device(s) 104) via the communication network 106 can be by manner of one or both of wired communication and wireless communication.

The foregoing will now be discussed in the context of an example scenario as shown in Fig. 1b, in accordance with an embodiment of the disclosure.

As mentioned earlier, authentication of user can, for example, be based on a user device such as a fob (e.g., key fob) or Smartphone. The example scenario will be discussed in the context of a Smartphone which can be capable of wireless communication and can be capable of facilitating authentication (e.g., the Smartphone can include the possibility of extensive authentication features using onboard computing power and/or potential cloud-based computing power). Moreover, a user device can, for example, be referable to as User Equipment (UE), in accordance with an embodiment of the disclosure.

Referring to Fig. 1b, in the example scenario, an apparatus 102 can, for example, correspond to/be associated with/include a communication apparatus (e.g., a transceiver) which can be carried by a vehicle 110. A device 104 can, for example, correspond to/be associated with/include a Smartphone carried by a user 120. A communication network 106 can, for example, correspond to/be associated with/include a wireless-based communication network such as a Fifth generation (5G)/ a Sixth generation (6G) communication network.

In the example scenario, communication apparatus can be configured to communicated with the Smartphone via 5G based communication standards (e.g., in association with a sidelink feature of 5G) in association with the 5G communication network.

Moreover, use of the Smartphone by the user 120 can, for example, be passive (e.g., the user 120 may not be required to operate the Smartphone actively). The communication apparatus can, for example, be configured to communicate with (e.g., by manner of pinging) the Smartphone using 5G wireless communication standard to authenticate communication link and/or to enable the sidelink localization feature.

In the example scenario, as mentioned earlier, the communication network 106 can, for example, correspond to a wireless-based communication network such as a 5G/6G communication network. It is contemplated that 5G and 6G capability can, for example, be defined by the 3GPP (3^{rd} Generation Partnership Project) standards release 17 onwards, in accordance with an embodiment of the disclosure.

For example, the 5G release 16 onwards of the 3GPP can, for example, define a localization method using a communication protocol, as will be discussed in further detail hereinafter.

In uplink direction, 3GPP introduced SRS (sounding reference signal) for positioning in 3GPP Release 16. The SRS can be transmitted separately from PUCCH (physical uplink control channel) and PUSCH (physical uplink shared channel). Moreover, SRS can, for example, be transmitted on any number of subcarriers in the last symbol in a subframe. Furthermore, SRS can, for example, take precedence over all other allocated channels.

It is contemplated that SRS can possibly resolve two aspects specific to positioning. Since positioning can involve measurements from multiple receiving base stations, a new signal should have enough range to reach not only the serving base station to which a user device is connected, but also neighboring base stations involved in the positioning process. The SRS can also be possibly configured to cover full bandwidth, where the resource elements can be spread across the different symbols so as to cover all subcarriers. The SRS can be configured based on a comb-based pattern similar to PRS (positioning reference signal). User devices can, for example, be multiplexed over the same transmitting symbol by assigning different comb patterns. To minimize interference, a user device can, for example, be configured with different SRS instances. Each SRS instance can be associated with an independent power control loop. This can allow SRS pointed at neighbor cells to have better signal receivability and can keep the interference low in the operation.

Each beam can provide measurement as collected across one or multiple resource and resource sets in the network. Beamforming the signal can, for example, facilitate improved signal to noise ratio (SNR) provided by the beamforming gain and can facilitate UE location information in terms of the angle of departure (AOD) based on the beam ID accessed by a UE, while a large number of antennas at the receiver in the uplink can enable fine angle of arrival (AOA) measurements with New Radio (NR) features. Many of these measurements can be standardized in the 3GPP to enable a variety of positioning possibilities (e.g., positioning methods). In 3GPP release17, a list of supported positioning methods can be extended to include round trip time (RTT) and angle-based positioning features. Inclusion of such updated positioning methods and techniques of existing positioning methods can, for example, enable high accuracy positioning for several use cases in 5G. Open and interoperable 5G positioning in the recent 3GPP release can, for example, enable appropriate positioning for a number of possible use cases. Work can, for example, be ongoing with advanced algorithms, adaptions to specific use cases and identification of relevant enhancements.

Generally, as mentioned earlier, the present disclosure contemplates, in an example scenario, passive use of the device 104 (e.g., a user equipment/device such as a Smartphone), in that the user 120 does not operate the device 104 actively. The apparatus 102 (e.g., a communication apparatus such as a transceiver) can be carried by a vehicle 110 and can communicate (e.g., pings) the device 104 using 5G wireless communication standard, to authenticate communication link and/or enable sidelink localization feature.

In one example, in accordance with an embodiment of the disclosure, the device 104 can be authenticated using one or more proprietary authentication features, a beamform configuration which can include one or more beamforms for data collection can be possible, and user position can be determined by manner of, for example, triangulation based on AOA and time of flight based on the beamform configuration.

Additionally, in an example, in accordance with an embodiment of the disclosure, the apparatus(es) 102 can be carried atop the vehicle 110. In this manner, a 360-degree unobstructed visibility around the vehicle 110 can possibly be facilitated in association with, for example, at least one onboard antenna carried by the apparatus(es) 102. The apparatus(es) 102 can be configured communicate (e.g., ping challenge) the device(s) 104 can be around the vehicle 110 to facilitate identification of at least one authenticated response such that localization protocol can be initiated. In an event where no authenticated response is received/communicated, the apparatus(es) 102 can be configured to operate in a sleep mode before attempting to restarting the process of identifying at least one authenticated response after a time period (e.g., after a time period of interval "Tping" which can be defined based on system response protocol). In an event where at least one authenticated response can be received (e.g., an authenticated ping), localization protocol can be initiated so as to measure using a plurality of Beamforms (e.g., Beamform1, Beamform 2... to Beamform "N"). By manner of measuring a plurality of Beamforms, an even Radio Frequency (RF) footprint can possibly be facilitated. Moreover, the present disclosure contemplates the possibility of diversity beam forming where spatially separated apparatuses 102 (e.g., spatially separated transceivers) can be possible for implementation of same protocol, but with a spatial separation to facilitate improved localization precision in the case of multilateral localization. Examples of such implementation can be as shown in a first illustrative implementation 130 per Fig. 1c, in accordance with an embodiment of the disclosure and a second illustrative implementation 140 per Fig. 1d, in accordance with an embodiment of the disclosure.

The example scenario as discussed above will be discussed in further detail based on a first example case, in accordance with an embodiment of the disclosure and a second example case, in accordance with an embodiment of the disclosure.

In the first example case, when an authenticated user approaches a vehicle from a distance, and the apparatus 102 carried by the vehicle can ping the device 104 carried by the authenticated user for authenticating a message transaction. The authenticated message transaction can correspond to/be associated with an authenticated communication to identify location of the authenticated user with reference to the vehicle so as to facilitate identification of approach direction of the authenticated user. The apparatus 102 carried by the vehicle can perform such pinging at regulated intervals of time to continuously track motion of the authenticated user with reference to the vehicle so as to facilitate identification of, for example, whether the authenticated user intends to approach the vehicle or is simply passing by in some other direction. Based on such identification (e.g., of whether the authenticated is approaching the vehicle or is simply passing by), the vehicle can be configured to perform one or more processing tasks in association with pre-authentication to facilitate access (e.g., unlocking one or more vehicle doors) when the authenticated user is identified to be approaching or to do nothing if the authenticated user is identified to be passing by.

In the second example case, when a user is passing by, the apparatus 102 carried by the vehicle can be configured to ping the device 104 carried by the user identify whether the user is authenticated or not. When the user is not identified to be authenticated, apparatus 102 can be configured to do nothing. When the user is identified to be authenticated, the apparatus 102 can be configured to initiate 5G localization feature to facilitate identification of user intention (e.g., whether the user is intending to approach the vehicle or is simply passing by).

In view of the foregoing, it is appreciable that the present disclosure generally contemplates the possibility that 5G sidelink localization can be utilized for facilitating identification of (which) time and space bound access feature to provide to a user of a vehicle, at a given time instant. It is further appreciable that the present disclosure generally contemplates sharing of beam forming and time of flight localization to improve adaptive accuracy of a RF system. It is yet further appreciable that the present disclosure generally contemplates the possibility of improvement on (existing) 5G implementation of the sidelink localization by manner of including a feature of beam direction as a parameter in localization algorithm. Moreover, it is appreciable that the present disclosure generally contemplates the possibility of multiple wireless access apparatuses 102 (e.g., transceivers) for providing spatially differentiated localization to facilitate improvement of reliability of location information.

The above-described advantageous aspect(s) of the system 100 of the present disclosure can also apply analogously (all) the aspect(s) of a below described apparatus(es) 102 and/or processing method of the present disclosure. Likewise, all below described advantageous aspect(s) of the apparatus(es) 102 and/or the processing method of the disclosure can also apply analogously (all) the aspect(s) of above described system 100 of the disclosure.

The aforementioned apparatus(es) 102 will be discussed in further detail with reference to Fig. 2 hereinafter.

Referring to Fig. 2, an apparatus 102 is shown in further detail in the context of an example implementation 200, according to an embodiment of the disclosure.

In the example implementation 200, the apparatus 102 can correspond to an electronic module 200a which can, for example, be capable of performing one or more processing tasks, in accordance with an embodiment of the disclosure.

The electronic module 200a can, for example, include a casing 200b. Moreover, the electronic module 200a can, for example, carry any one of a first module 202, a second module 204, a third module 206, or any combination thereof.

In one embodiment, the electronic module 200a can carry a first module 202, a second module 204 and/or a third module 206. In a specific example, the electronic module 200a can carry a first module 202, a second module 204 and a third module 206, in accordance with an embodiment of the disclosure.

In this regard, it is appreciable that, in one embodiment, the casing 200b can be shaped and dimensioned to carry any one of the first module 202, the second module 204 and the third module 206, or any combination thereof.

The first module 202 can be coupled to one or both of the second module 204 and the third module 206. The second module 204 can be coupled to one or both of the first module 202 and the third module 206. The third module 206 can be coupled to one or both of the first module 202 and the second module 204. In one example, the first module 202 can be coupled to the second module 204 and the second module 204 can be coupled to the third module 206, in accordance with an embodiment of the disclosure. Coupling between the first module 202, the second module 204 and/or the third module 206 can, for example, be by manner of one or both of wired coupling and wireless coupling. Each of the first module 202, the second module 204 and the third module 206 can correspond to one or both of a hardware-based module and a software-based module, according to an embodiment of the disclosure.

In one example, the first module 202 can correspond to a hardware-based receiver which can be configured to receive one or more input signals.

The second module 204 can, for example, correspond to a network-based/software-based and/or hardware-based (e.g., a microprocessor) processing module which can be configured to perform (and/or facilitate performance of) one or more processing tasks. Specifically, the second module 204 can, for example, be configured to process and/or facilitate processing of the received input signal(s) in a manner so as to generate/derive one or more output signal(s), in accordance with an embodiment of the disclosure.

The third module 206 can, in one example, correspond to a hardware-based transmitter which can be configured to communicate the output signal(s) from the electronic module 200a, in accordance with an embodiment of the disclosure. The output signal(s) can, for example, be communicated from the electronic module 200a to one or more devices 104, one or more other apparatuses 102 and/or one or more vehicles 110, in accordance with an embodiment of the disclosure.

The present disclosure contemplates the possibility that the first and second modules 202/204 can be an integrated software-hardware based module (e.g., an electronic part which can carry a software program/algorithm in association with receiving and processing functions/an electronic module programmed to perform the functions of receiving and processing). The present disclosure further contemplates the possibility that the first and third modules 202/206 can be an integrated software-hardware based module (e.g., an electronic part which can carry a software program/algorithm in association with receiving and transmitting functions/an electronic module programmed to perform the functions of receiving and transmitting). The present disclosure yet further contemplates the possibility that the first and third modules 202/206 can be an integrated hardware module (e.g., a hardware-based transceiver) capable of performing the functions of receiving and transmitting.

As mentioned earlier, the present disclosure generally contemplates the possibility that 5G sidelink localization can be utilized for facilitating identification of (which) time and space bound access feature to provide to a user of a vehicle, at a given time instant. It is further appreciable that the present disclosure generally contemplates sharing of beam forming and time of flight localization to improve adaptive accuracy of a RF system. It is yet further appreciable that the present disclosure generally contemplates the possibility of improvement on (existing) 5G implementation of the sidelink localization by manner of including a feature of beam direction as a parameter in localization algorithm. Moreover, it is appreciable that the present disclosure generally contemplates the possibility of multiple wireless access apparatuses 102 (e.g., transceivers) for providing spatially differentiated localization to facilitate improvement of reliability of location information.

The above-described advantageous aspect(s) of the apparatus 102 of the present disclosure can also apply analogously (all) the aspect(s) of a below described processing method of the present disclosure. Likewise, all below described advantageous aspect(s) of the processing method of the disclosure can also apply analogously (all) the aspect(s) of above described apparatus 102 of the disclosure. It is to be appreciated that these remarks apply analogously to the earlier discussed system 100 of the present disclosure.

Referring to Fig. 3, a processing method 300 in association with the system 100 is shown, according to an embodiment of the disclosure. The processing method 300 can, for example, be suitable for facilitating user authentication and/or user intention, in accordance with an embodiment of the disclosure.

The processing method 300 can, for example, include any one of an input step 302, a processing step 304 and an output step 306, or any combination thereof, in accordance with an embodiment of the disclosure. For example, the processing method 300 can include an input step 302, a processing step 304 and/or an output step 306, in accordance with an embodiment of the disclosure.

In one embodiment, the processing method 300 can include an input step 302, a processing step 304 and an output step 306. In another embodiment, the processing method 300 can include an input step 302 and a processing step 304. In yet another embodiment, the processing method 300 can include a processing step 304 and an output step 306. In yet a further embodiment, the processing method 300 can include a processing step 304. In yet a further additional embodiment, the processing method 300 can include one of an input step 302, a processing step 304 and an output step 306 (i.e., an input step 302, a processing step 304 or an output step 306). In yet another further additional embodiment, the processing method 300 can, for example, include an input step 302 and an output step 306.

With regard to the input step 302, one or more processing tasks in association with receiving one or input signals can be performed, in accordance with an embodiment of the disclosure. For example, the apparatus(es) 102 can be configured to perform the processing task(s) in association with receiving at least one input signal generated by and/or communicated from the device(s) 104, as discussed earlier with reference to Fig. 1a, in accordance with an embodiment of the disclosure.

With regard to the processing step 304, one or more processing tasks can be performed, in accordance with an embodiment of the disclosure. Specifically, the received input signal(s) can, for example, be processed in a manner so as to generate one or more output signals, in accordance with an embodiment of the disclosure. For example, the apparatus(es) 102, as discussed earlier with reference to Fig. 1a, can be configured to perform and/or facilitate the processing task(s) in association/in connection with the input signal(s) in a manner so as to generate one or more output signals, as discussed earlier with reference to Fig. 1a, in accordance with an embodiment of the disclosure.

With regard to the output step 306, one or more processing tasks in association with communicating one or more output signals can be performed in accordance with an embodiment of the disclosure. The output signal(s) can, for example, be communicated (e.g., transmitted) from the apparatus(es) 102. For example, the apparatus(es) 102 can be configured to perform the processing task(s) in association with communicating the output signal(s), as discussed earlier with reference to Fig. 1a, in accordance with an embodiment of the disclosure.

The present disclosure further contemplates a computer program (not shown) which can include instructions which, when the program is executed by a computer (not shown), cause the computer to carry out the input step 302, the processing step 304 and/or the output step 306, as discussed with reference to the processing method 300.

The present disclosure yet further contemplates a computer readable storage medium (not shown) having data stored therein representing software executable by a computer (not shown), the software including instructions, when executed by the computer, to carry out the input step 302, the processing step 304 and/or the output step 306, as discussed with reference to the processing method 300.

As mentioned earlier, the present disclosure generally contemplates the possibility that 5G sidelink localization can be utilized for facilitating identification of (which) time and space bound access feature to provide to a user of a vehicle, at a given time instant. It is further appreciable that the present disclosure generally contemplates sharing of beam forming and time of flight localization to improve adaptive accuracy of a RF system. It is yet further appreciable that the present disclosure generally contemplates the possibility of improvement on (existing) 5G implementation of the sidelink localization by manner of including a feature of beam direction as a parameter in localization algorithm. Moreover, it is appreciable that the present disclosure generally contemplates the possibility of multiple wireless access apparatuses 102 (e.g., transceivers) for providing spatially differentiated localization to facilitate improvement of reliability of location information.

In view of the foregoing, it is appreciable that the present disclosure generally contemplates a processing method 300 which can, for example, be suitable for facilitating control of a vehicle (e.g., vehicle 110). Facilitation of vehicle control can, for example, be based on user intention of a user (e.g., user 120) outside of the vehicle.

The processing method 300 can, for example, include an input step 302 which can include receiving one or more input signals which can be communicated from a user device (e.g., a device 104) carried by a user.

The processing method 300 can, for example, include a processing step 304 which can include processing the input signal(s) in a manner so as to verify whether the user is an authenticated user. When the user can be verified to be an authenticated user, intention of the authenticated user can be determined. Moreover, based on determined intention of the authenticated user, one or more control signals can be capable of being generated. The control signal(s) can, for example, correspond to the aforementioned output signal(s), in accordance with an embodiment of the disclosure.

The processing method 300 can, for example, include an output step 306 which can include communicating the control signal(s) for facilitating control of at least one feature associated with the vehicle (e.g., a security related feature/an access related feature such as unlocking one or more doors of the vehicle or disabling vehicle alarm and/or a user convenience related feature such as activating interior vehicle lighting/headlights or starting the vehicle).

In one embodiment, the input signal(s) can be capable of being communicated based on communication of at least one ping challenge to a user device and verification of whether the user is an authenticated user can be capable of being performed over a 5G (Fifth Generation) communication network. For example, the input signal(s) can correspond to one or more ping challenges.

In one embodiment, at least one ping challenge can be capable of being generated and communicated by an apparatus 102. The apparatus 102 can, for example, be carried atop the vehicle. For example, the input signal(s) can be capable of being communicated based on communication of the at least one ping challenge to the user device.

In one embodiment, the input signal(s) can be processed to verify at least one authenticated ping indicative of the user being an authenticated user. In this regard, it is appreciable that the input signal(s) can, for example, include/be associated with/correspond to authentication data/information which can, for example, be indicative of one or more authenticated pings.

In one embodiment, based on one or more authenticated pings received, localization protocol can be initiated based on measurement via one or more beamforms (e.g., a plurality of beamforms).

In one embodiment, the beamform(s) can, for example, be based on a transceiver. The transceiver can, for example, be associated with/be included as a part of/correspond to an apparatus 102, in accordance with an embodiment of the disclosure.

In one embodiment the beamform(s) can, for example, be based on a plurality of spatially separated transceivers. Each transceiver can, for example, be associated with/be included as a part of/correspond to an apparatus 102, in accordance with an embodiment of the disclosure.

In one embodiment, intention of the authenticated user can be determined based on whether (or not) the authenticated user is approaching the vehicle.

In one embodiment, the input signal(s) can be processed in a manner so as to identify user location relative to the vehicle for determining direction of approach of the authenticated user. In this regard, the input signal(s) can, for example, include/correspond to/be associated with location-based data/information which can, for example, be indicative of user location.

In one embodiment, a plurality of input signals can be communicated and can be processed for one or both of identifying user location of the user and identifying direction of user approach with reference to the vehicle.

In one embodiment, the input signal(s) can be communicated and processed at regulated intervals of time to continuously track user motion of one or more authenticated users with reference to the car so as to determine user intention of the authenticated user(s) so as to determine whether the authenticated user(s) can be intending to approach the vehicle (or not).

Further, in view of the foregoing, it is appreciable that the present disclosure further generally contemplates an apparatus 102 in association with the processing method 300, in accordance with an embodiment of the disclosure. Moreover, the apparatus 102 can, for example, correspond to an electronic module 200a as discussed earlier with reference to Fig. 2, in accordance with an embodiment of the disclosure.

The apparatus 102 can, for example, include a first module 202, a second module 204 and a third module 206, in accordance with an embodiment of the disclosure.

The first module 202 can, for example, be configured to receive one or more input signals.

The second module 204 can, for example, be configured to process and/or facilitate processing of the input signal(s) according to the processing method 300, as discussed earlier, to generate one or more output signals

The third module 206 can, for example, be configured to communicate the output signal(s).

In one embodiment, the output signal(s) can, for example, be associated one or more control signals. The control signal(s) can, for example, be communicated for facilitating, for example, unlocking of a vehicle associated with an authenticated user when it is determinable that the authenticated user is approaching the vehicle.

As mentioned earlier, the present disclosure generally contemplates the possibility that 5G sidelink localization can be utilized for facilitating identification of (which) time and space bound access feature to provide to a user of a vehicle, at a given time instant. It is further appreciable that the present disclosure generally contemplates sharing of beam forming and time of flight localization to improve adaptive accuracy of a RF system. It is yet further appreciable that the present disclosure generally contemplates the possibility of improvement on (existing) 5G implementation of the sidelink localization by manner of including a feature of beam direction as a parameter in localization algorithm. Moreover, it is appreciable that the present disclosure generally contemplates the possibility of multiple wireless access apparatuses 102 (e.g., transceivers) for providing spatially differentiated localization to facilitate improvement of reliability of location information.

It should be appreciated that the embodiments described above can be combined in any manner as appropriate (e.g., one or more embodiments as discussed in the "Detailed Description" section can be combined with one or more embodiments as described in the "Summary of the Invention" section).

It should be further appreciated by the person skilled in the art that variations and combinations of embodiments described above, not being alternatives or substitutes, may be combined to form yet further embodiments.

In one example, an apparatus 102 can be coupled to one or more processing modules carried by the vehicle. The processing module(s) can, for example, be configured to receive and processing the output signal(s) for facilitate, for example, vehicle control based on user intention of an authenticated user, in accordance with an embodiment of the disclosure.

In another example, a device 104 can possibly be similar/analogous to an apparatus 102. In this regard, where appropriate, the foregoing discussion concerning the example implementation 200 in association with an apparatus 102 can, for example, analogously apply to a device 104, in accordance with an embodiment of the disclosure.

In the foregoing manner, various embodiments of the disclosure are described for addressing at least one of the foregoing disadvantages. Such embodiments are intended to be encompassed by the following claims, and are not to be limited to specific forms or arrangements of parts so described and it will be apparent to one skilled in the art in view of this disclosure that numerous changes and/or modification can be made, which are also intended to be encompassed by the following claims.

## Claims

1. A processing method (300) suitable for facilitating control of a vehicle based on user intention of a user outside of the vehicle, the processing method comprising:
an input step (302) comprising receiving at least one input signal communicable from a user device carried by a user;
a processing step (304) comprising processing the at least one input signal in a manner so as to:
verify whether the user is an authenticated user,
wherein when the user is verified to be an authenticated user, intention of the authenticated user is determined, and
wherein based on determined intention of the authenticated user, at least one control signal is capable of being generated, and
an output step (306) comprising communicating the at least one control signal for facilitating control of at least one feature associated with the vehicle,
wherein the at least one input signal being processable to verify at least one authenticated ping indicative of the user being an authenticated user; and
wherein based on the at least one authenticated ping received, localization protocol is capable of being initiated based on measurement via a plurality of beamforms.

2. The processing method (300) as in claim 1, wherein the at least one input signal is capable of being communicated based on communication of at least one ping challenge to the user device and verification of whether the user is an authenticated user is capable of being performed over a 5G (Fifth Generation) communication network.

3. The processing method (300) as in claim 2, wherein at least one ping challenge is capable of being generated and communicated by an apparatus carried atop the vehicle, and wherein the at least one input signal is capable of being communicated based on communication of the at least one ping challenge to the user device.

4. The processing method (300) as in claim 1, wherein the plurality of beamforms being based on a transceiver.

5. The processing method (300) as in claim 1, wherein the plurality of beamforms being based on a plurality of spatially separated transceivers.

6. The processing method (300) as in claim 1, wherein intention of the authenticated user being determinable based on whether the authenticated user is approaching the vehicle.

7. The processing method (300) as in claim 1, the at least one input signal is capable of being processed in a manner so as to identify user location relative to the vehicle for determining direction of approach of the authenticated user.

8. The processing method (300) as in claim 7, wherein a plurality of input signals is communicable and processable for at least one of:
Identifying user location of the user
Identifying direction of user approach with reference to the vehicle.

9. The processing method (300) as in claim 1, wherein the input signals are capable of being communicated and processed at regulated intervals of time to continuously track user motion of authenticated users with reference to the car so as to determine user intention of the authenticated user so as to determine whether the authenticated user intends to approach the vehicle.

10. A computer program comprising instructions which, when the program is executed by a computer, cause the computer to carry out the input step (302), the processing step (304) and the output step (306) according to the processing method (300) of any of the preceding claims.

11. A computer readable storage medium having data stored therein representing software executable by a computer, the software including instructions, when executed by the computer, to carry out the input step (302), the processing step (304) and the output step (306) according to the processing method (300) of claims 1-9.

12. An apparatus (102) comprising:
a first module (202) configurable to receive at least one input signal;
a second module (204) configurable to process the input signal according to the processing method (300) of claim 1 to generate at least one output signal; and
a third module (206) configurable to communicate at least one output signal.
